# EUROPEAN PATENT APPLICATION

(11) **EP 2 469 112 A2**
(43) Date of publication of application: **27.06.2012**
(21) Application number: 11192721.6
(22) Date of filing: 09.12.2011
(51) Int. Cl.: F16D 3/205

(54) **High joint angle tripod type constant velocity joint**

(30) Priority: 21.12.2010 KR 20100131104
(71) Applicant: Hyundai Wia Corporation, Changwo-si, Gyeongsangnam-do 642-110 (KR)
(72) Inventor: Cho, Jeong Hyun, Gyeonggi-do 445-897 (KR)
(74) Representative: Lippert, Stachow & Partner

(57) **Abstract**

Provided is a high joint angle tripod type constant velocity joint, which can increase a maximum joint angle amount and can make an outer roller have a relatively small width by forming a protrusion on a circumferential outer surface at a top end of an inner roller, thereby maximizing a vertical movement range of the inner roller while preventing the outer roller from being released, and which can reduce the manufacturing cost by reducing the number of components. The high joint angle tripod type constant velocity joint includes a housing (22) transmitting rotational power of an engine and having track grooves (22a) which are defined therein, a shaft (21) receiving the rotational power from the housing and rotating, a spider (23) installed in the housing to be formed at an end of the shaft to connect the housing and the shaft and having three truunions (23a) to be inserted into the track grooves, inner rollers (26) installed on circumferential outer surfaces of the trunnions of the spider and having a protrusion (26a) formed on circumferential outer surfaces at top ends of the inner rollers, needle rollers (25) assembled to circumferential outer surfaces of the inner rollers, and outer rollers having protrusions having a minimum inner diameter protruding on circumferential inner surfaces at top and bottom ends, the outer rollers formed on circumferential outer surfaces of the needle rollers to reduce friction between the housing and the shaft.

## Description

### CROSS-REFERENCE TO RELATED APPLICATION

This application claims priority to and the benefit of Korean Patent Application No. 10-2010-131104, filed on December 21, 2011, the entire content of which is incorporated herein by reference.

### Background of the Invention

### 1. Field of the Invention

The present invention relates to a high joint angle tripod type constant velocity joint, and more particularly, to a high joint angle tripod type constant velocity joint, which can increase a maximum joint angle amount and can make an outer roller have a relatively small width by forming a protrusion on a circumferential outer surface at a top end of an inner roller, thereby maximizing a vertical movement range of the inner roller while preventing the outer roller from being released, and which can reduce the manufacturing cost by reducing the number of components.

### 2. Description of the Related Art

In general, a joint functions to transmit rotational power (torque) between two rotation shafts which meet each other at an angle. In the case of a propeller shaft having a small power transmission angle, a hook joint, a flexible joint, etc. are used, and in the case of the driving shaft of a front wheel drive vehicle having a large power transmission angle, a constant velocity joint is used.

Since the constant velocity joint can reliably transmit power at a constant velocity even when an angle between a driving shaft and a driven shaft is large, the constant velocity joint is mainly used for the axle shaft of an independent suspension type front wheel drive vehicle. When viewed from a shaft, a tripod type constant velocity joint is provided to one end of the shaft which faces an engine (the inboard-side end), and a Birfield type joint is provided to the other end of the shaft which faces a tire (the outboard-side end).

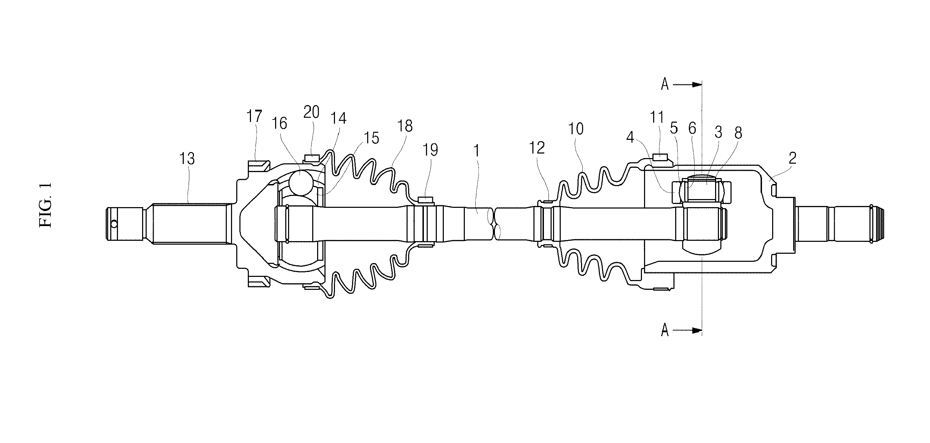

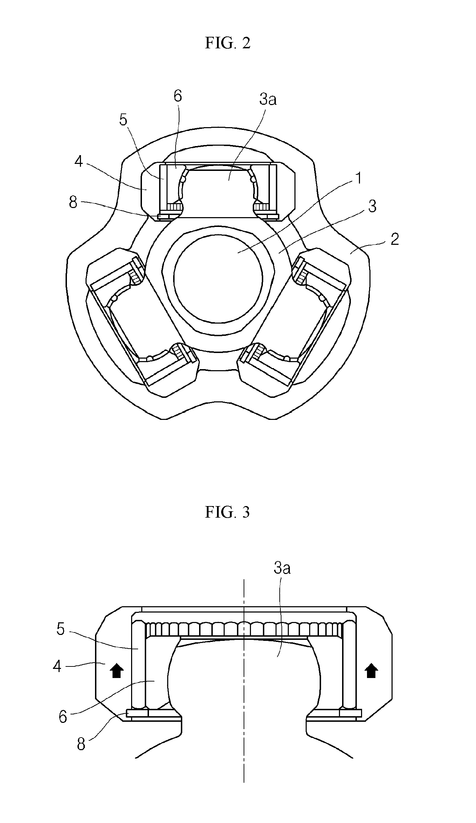

FIG. 1 is a cross-sectional view illustrating conventional constant velocity joints, and FIG. 2 is a schematic view illustrating an external appearance of the conventional constant velocity joints shown in FIG. 1.

As shown in FIGS. 1 and 2, the conventional constant velocity joints comprise a tripod type constant velocity joint which is provided to the right end of a shaft 1 which faces an engine (the inboard-side end) and a Birfield type constant velocity joint provided to the left end of the shaft 1 which faces a tire (the outboard-side end).

The tripod type constant velocity joint installed on the right end of the shaft 1 (which faces the engine) comprises a housing 2 which transmits rotational power of the engine (not shown) and is defined with track grooves on the inner surface thereof, the shaft 1 which receives the rotational power from the housing 2 and rotates, a spider 3 which is disposed in the housing 2, is coupled to one end of the shaft 1 to connect the housing 2 and the shaft 1 with each other and is formed with three trunnions to be respectively inserted into the track grooves of the housing 2, inner rollers 6 each of which is arranged on the circumferential outer surface of each trunnion of the spider 3, needle rollers 5 each of which is arranged on the circumferential outer surface of each inner roller 6, outer rollers 4 each of which is installed on the circumferential outer surface of each needle roller 5 to reduce friction between the housing 2 and the shaft 1, a retainer ring 8 assembled with lower ends of the outer rollers 4 to prevent the outer rollers 4 from being released, a boot 10 having one end which is connected to the housing 2 and the other end which is connected to the shaft 1, and clamping bands 11 and 12 which clamp both ends of the boot 10.

The Birfield type constant velocity joint installed on the left end of the shaft 1 which faces the tire (i.e., the outboard-side end) comprises an inner race 15 which is installed on the left end of the shaft 1 to receive the rotational power from the tripod type constant velocity joint and to then rotate, an outer race 13 which is installed around the inner race 15, balls 16 for transmitting the rotational power of the inner race 15 to the outer race 13, a cage 14 for supporting the balls 16, a sensor ring 17 which is installed around the outer race 13, a boot 18 having one end which is connected to the shaft 1 and the other end which is connected to the outer race 13, and clamping bands 19 and 20 which clamp both ends of the boot 18.

Hereafter, the operation of the conventional constant velocity joints constructed as mentioned above will be described.

As the rotational power outputted from an engine (not shown) is transmitted to the housing 2 through a transmission (not shown), the housing 2 is rotated. The rotational power of the housing 2 is transmitted to the spider 3 through the outer rollers 4, the needle rollers 5 and the inner rollers 6, and then the shaft 1 to which the spider 3 is coupled is rotated. The rotational power of the shaft 1 is transmitted to the outer race 13 through the inner race 15 and the balls 16, and then the wheel (not shown) connected to the outer race 13 is rotated.

In the tripod type constant velocity joint which is provided to the right end of the shaft 1 which faces the engine (i.e., the inboard-side end), as the outer rollers 4 slide in the track grooves of the housing 2, the rotation angle of the shaft 1 which is operationally associated with the outer rollers 4 is changed, so that a joint angle is created to follow the displacement of a vehicle. In the Birfield type constant velocity joint which is provided to the left end of the shaft 1 which faces the tire (i.e., the outboard-side end), the rotation angle of the outer race 13 is changed due to the presence of the balls 16 to follow the displacement of the vehicle.

The boot 10 of the tripod type constant velocity joint and the boot 18 of the Birfield type constant velocity joint respectively function to enclose the tripod type constant velocity joint and the Birfield type constant velocity joint, so that the tripod type constant velocity joint and the Birfield type constant velocity joint are prevented from being contaminated by foreign substances.

Meanwhile, in the tripod type constant velocity joint, as shown in FIG. 3, the outer roller 4 can be prevented from being released from the spider 3 using the retainer clip 8.

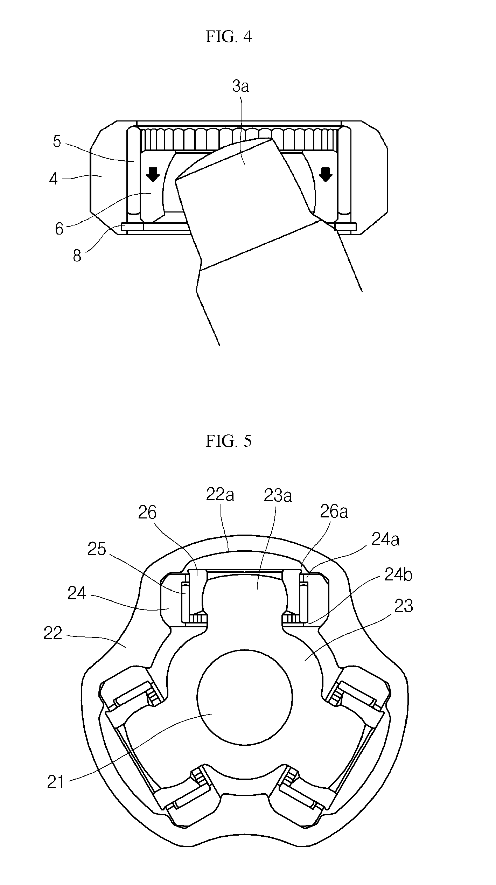

With this configuration, in the tripod type constant velocity joint, as shown in FIG. 4, if a joint angle is created, the inner roller 6 is moved downward and interference between the inner roller 6 and the retainer clip 8 occurs when the joint angle exceeds a predetermined angle. When the joint angle is created in the tripod type constant velocity joint, one important determinant factor of the maximum joint angle amount is a distance of the inner roller 6 moving downward until interference between the inner roller 6 and the retainer clip 8 occurs. In the conventional tripod type constant velocity joint, however, there is a limitation in increasing the maximum joint angle amount due to the interference between the inner roller 6 and the retainer clip 8.

In addition, in the conventional tripod type constant velocity joint, since it is necessary to install the retainer clip 8 in the outer roller 4, a width of the outer roller 4 may become relatively large.

### Brief Summary of the Invention

Accordingly, the present invention has been made to solve the above-mentioned problems occurring in the prior art, and an object of the present invention is to provide a high joint angle tripod type constant velocity joint, which can increase a maximum joint angle amount and can make an outer roller have a relatively small width by forming a protrusion on a circumferential outer surface at a top end of an inner roller, thereby maximizing a vertical movement range of the inner roller while preventing the outer roller from being released, and which can reduce the manufacturing cost by reducing the number of components.

Another object of the present invention is to provide a high joint angle tripod type constant velocity joint, which can prevent an outer roller from being released without using a retainer clip, thereby reducing the number of components and ultimately reducing the manufacturing cost.

In accordance with one aspect of the present invention, there is provided a high joint angle tripod type constant velocity joint including a housing transmitting rotational power of an engine and having track grooves which are defined therein, a shaft receiving the rotational power from the housing and rotating, a spider installed in the housing to be formed at an end of the shaft to connect the housing and the shaft and having three truunions to be inserted into the track grooves, inner rollers installed on circumferential outer surfaces of the trunnions of the spider and having a protrusion formed on circumferential outer surfaces at top ends of the inner rollers, needle rollers assembled to circumferential outer surfaces of the inner rollers, and outer rollers having protrusions having a minimum inner diameter protruding on circumferential inner surfaces at top and bottom ends, the outer rollers formed on circumferential outer surfaces of the needle rollers to reduce friction between the housing and the shaft.

An outer diameter of the needle roller may be larger than a minimum inner diameter of the outer roller, so that upward and downward movements of the outer roller are both restrained by the needle roller.

An inner diameter of the needle roller may be smaller than the maximum diameter of the protrusion of the inner roller, so that downward movement of the inner roller is restrained by the needle roller.

The maximum diameter of the protrusion formed on the circumferential outer surface at the top end of the inner roller may be larger than the inner diameter of the needle roller and smaller than the minimum inner diameter of the outer roller.

When the outer roller is moved upwardly, the needle roller may be restrained by the protrusion formed on the circumferential outer surface at the top end of the inner roller and the outer roller may then be restrained by the needle roller.

When the outer roller is moved downwardly, the protrusion formed on the circumferential outer surface at the top end of the inner roller may be restrained by the needle roller and the outer roller may then be restrained by the needle roller.

The tripod type constant velocity joint may be installed at an inboard-side end of the shaft which faces an engine.

As described above, in the high joint angle tripod type constant velocity joint according to the present invention, a protrusion is formed on a circumferential outer surface at a top end of an inner roller, so that a maximum joint angle amount can be increased and an outer roller can be made to have a relatively small width, thereby increasing the maximum joint angle amount while preventing an outer roller from being released. In addition, since the number of components is reduced, the manufacturing cost can be reduced.

Additional aspects and/or advantages of the invention will be set forth in part in the description which follows and, in part, will be obvious from the description, or may be learned by practice of the invention.

### Brief Description of the Drawings

The objects, features and advantages of the present invention will be more apparent from the following detailed description in conjunction with the accompanying drawings, in which:
FIG. 1 is a cross-sectional view illustrating conventional constant velocity joints;
FIG. 2 is a cross-sectional view taken along the line A-A of FIG. 1;
FIGS. 3 and 4 are cross-sectional views illustrating an operating state of conventional tripod type constant velocity joints;
FIG. 5 is a cross-sectional view illustrating a high joint angle tripod type constant velocity joint according to an embodiment of the present invention; and
FIGS. 6 and 7 are cross-sectional views illustrating an operating state of the high joint angle tripod type constant velocity joint shown in FIG. 5.

### Detailed Description of the Invention

Hereinafter, a preferred embodiment of the present invention will be described with reference to the accompanying drawings with several exemplary or preferred embodiments thereof. Other advantages and features of the invention will also become apparent upon reading the following detailed description and upon reference to the accompanying drawings.

However, the following descriptions of such embodiments are intended primarily for illustrating the principles and exemplary constructions of the present invention, and the present invention is not specifically limited to these exemplary embodiments. Thus, one skilled in the art can appreciate or recognize that various modifications, substitutions and equivalents thereof can be made thereto without departing from the spirit and scope of the present invention.

FIG. 5 is a cross-sectional view illustrating a high joint angle tripod type constant velocity joint according to an embodiment of the present invention.

As shown in FIG. 5, the high joint angle tripod type constant velocity joint according to an embodiment of the present invention includes a housing 22 which transmits rotational power of an engine (not shown) and is defined with track grooves 22a on the inner surface thereof, a shaft 21 which receives the rotational power from the housing 22 and rotates, a spider 23 which is disposed in the housing 22 to be coupled to one end of the shaft 21 to connect the housing 22 and the shaft 21 with each other and is formed with three trunnions 23 a to be respectively inserted into the track grooves 22a of the housing 22, inner rollers 26 each of which is arranged on a circumferential outer surface of the trunnion 23a of the spider 23 and has a protrusion 26a formed on a circumferential outer surface at a top end of the inner roller 26, needle rollers 25 each of which is arranged on the circumferential outer surface of the inner roller 26, and outer rollers 24 each of which is installed on the circumferential outer surface of the needle roller 25 to reduce friction between the housing 22 and the shaft 21.

The outer rollers 24 have protrusions 24a and 24b having a minimum inner diameter protruding on circumferential inner surfaces at top and bottom ends.

An outer diameter of the needle roller 25 is larger than a minimum inner diameter of the outer roller 24, so that upward and downward movements of the outer roller 24 are both restrained by the needle roller 25.

An inner diameter of the needle roller 25 is smaller than the maximum diameter of the protrusion 26a of the inner roller 26, so that downward movement of the inner roller 26 is restrained by the needle roller 25.

The maximum diameter of the protrusion 26a formed on the circumferential outer surface at the top end of the inner roller 26 is larger than the inner diameter of the needle roller 25 and smaller than the minimum inner diameter of the outer roller 24.

When the outer roller 24 is moved upwardly, the needle roller 25 is restrained by the protrusion 26a formed on the circumferential outer surface at the top end of the inner roller 26, and the outer roller 24 is then restrained by the needle roller 25.

When the inner roller 26 is moved downwardly, the protrusion 26a formed on the circumferential outer surface at the top end of the inner roller 26 is restrained by the needle roller 25.

The afore-constructed high joint angle tripod type constant velocity joint according to an embodiment of the present invention operates as follows.

As the rotational power outputted from an engine (not shown) is transmitted to the housing 22 through a transmission (not shown), the housing 2 is rotated. The rotational power of the housing 22 is transmitted to the spider 23 through the outer rollers 24, the needle rollers 25 and the inner rollers 26, and then the shaft 21 to which the spider 23 is coupled is rotated.

While the rotational power is transmitted to the shaft 21, the outer roller 24 assembled on the trunnion 23a of the spider 23 slidably moves in the track groove 22a of the housing 22, so that a rotation angle of the shaft 21 associated with the outer roller 24 is changed, so that a joint angle is created to follow the displacement of a vehicle.

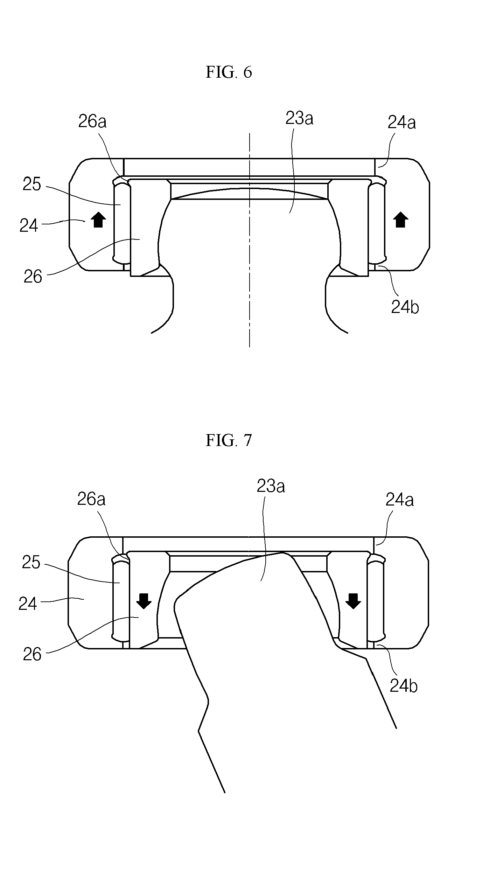

In this case, as shown in FIG. 6, if the outer roller 24 is moved upwardly, as indicated by arrows, the needle roller 25 is restrained by the protrusion 26a formed on the circumferential outer surface at the top end of the inner roller 26, and the outer roller 24 is then restrained by the needle roller 25, thereby preventing the outer roller 24 from being released.

As shown in FIG. 7, when the tripod type constant velocity joint is rotated in a bent state, the inner roller 26 is moved downwardly, as indicated by arrows, until it is restrained with the needle roller 25 by the protrusion 26a formed on the circumferential outer surface at the top end of the inner roller 26, thereby being further moved downwardly.

As described above, since the outer roller 24 is prevented from being released using the protrusion 26a formed on the circumferential outer surface at the top end of the inner roller 26, a relatively small width of the outer roller 24 can be set without installing a retainer clip 8 in the outer roller 24.

In addition, a vertical movement range of the inner roller 26 can be maximized, thereby improving the maximum joint angle amount of the tripod type constant velocity joint.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined by the appended claims.

## Claims

1. A high joint angle tripod type constant velocity joint, comprising:
a housing transmitting rotational power of an engine and having track grooves which are defined therein;
a shaft receiving the rotational power from the housing and rotating;
a spider installed in the housing to be formed at an end of the shaft to connect the housing and the shaft and having three truunions to be inserted into the track grooves;
inner rollers installed on circumferential outer surfaces of the trunnions of the spider and having a protrusion formed on circumferential outer surfaces at top ends of the inner rollers;
needle rollers assembled to circumferential outer surfaces of the inner rollers; and
outer rollers having protrusions having a minimum inner diameter protruding on circumferential inner surfaces at top and bottom ends, the outer rollers formed on circumferential outer surfaces of the needle rollers to reduce friction between the housing and the shaft.

2. The high joint angle tripod type constant velocity joint of claim 1, wherein an outer diameter of the needle roller is larger than a minimum inner diameter of the outer roller, so that upward and downward movements of the outer roller are both restrained by the needle roller.

3. The high joint angle tripod type constant velocity joint of claim 1, wherein an inner diameter of the needle roller is smaller than the maximum diameter of the protrusion of the inner roller, so that downward movement of the inner roller is restrained by the needle roller.

4. The high joint angle tripod type constant velocity joint of claim 1, wherein the maximum diameter of the protrusion formed on the circumferential outer surface at the top end of the inner roller is larger than the inner diameter of the needle roller and smaller than the minimum inner diameter of the outer roller.

5. The high joint angle tripod type constant velocity joint of claim 1, wherein when the outer roller is moved upwardly, the needle roller is restrained by the protrusion formed on the circumferential outer surface at the top end of the inner roller and the outer roller is then restrained by the needle roller.

6. The high joint angle tripod type constant velocity joint of claim 1, wherein when the outer roller is moved downwardly, the protrusion formed on the circumferential outer surface at the top end of the inner roller is restrained by the needle roller and the outer roller is then restrained by the needle roller.

7. The high joint angle tripod type constant velocity joint of claim 1, wherein the tripod type constant velocity joint is installed at an inboard-side end of the shaft which faces an engine.
